# EUROPEAN PATENT SPECIFICATION

(11) **EP 1 310 114 B1**
(45) Date of publication and mention of the grant of the patent: **04.10.2006**
(21) Application number: 01950140.2
(22) Date of filing: 06.07.2001
(51) Int. Cl.: H04Q 7/22, H04Q 7/32

(54) **MOBILE COMMUNICATION SYSTEM IN WHICH THE INFORMATION CONTENT IS TAILORED DEPENDING ON THE CAPABILITY OF THE BEARER THAT IS USED FOR THE SPECIFIC ACCESS**
MOBILKOMMUNIKATIONSSYSTEM, BEI DEM DER INFORMATIONSINHALT ABHÄNGIG VON DER FÄHIGKEIT DES FÜR DEN SPEZIFISCHEN ZUGRIFF VERWENDETEN TRÄGERS ZURECHTGESCHNITTEN WIRD
SYSTEME DE COMMUNICATION MOBILE DANS LEQUEL LE CONTENU D'INFORMATION EST PERSONNALISE EN FONCTION DE LA CAPACITE DU SUPPORT UTILISE POUR L'ACCES SPECIFIQUE

(30) Priority: 07.07.2000 SE 0002572; 01.09.2000 SE 0003091
(43) Date of publication of application: 14.05.2003
(73) Proprietor: TELEFONAKTIEBOLAGET LM ERICSSON (publ), 164 83 Stockholm (SE)
(72) Inventor: SKOG, Robert, S-165 76 Hässelby (SE); PEHRSON, Staffan, S-182 39 Danderyd (SE)
(74) Representative: Holmberg, Nils Anders Patrik
(86) International application number: PCT/SE2001/001564
(87) International publication number: WO 2002/005581

(56) References cited:
- WO-A1-01/35689
- WO-A1-95/35002
- WO-A2-99/56431

## Description

### Field of the invention

The present invention relates to a communication system, its elements and methods of operating a communication system and its elements according to the preambles of the independent claims.

### Background of the invention

In the mobile Internet world, users may have more than one type of radio access to reach their applications.
The different radio accesses (access bearers) could be e.g. Short Message Service (SMS), Unstructured Supplemental Service Data (USSD), Circuit Switched Data (CSD) (9.6 Kbps), CSD (14.4 Kbps), General Packet Radio Services (GPRS) (up to 384 Kbps), Universal Mobile Telephone System (UMTS) (up to 2 Mbps) or Bluetooth (short range, high frequency communication protocol).
These bearers have different capabilities in terms of e.g. transmission speed.

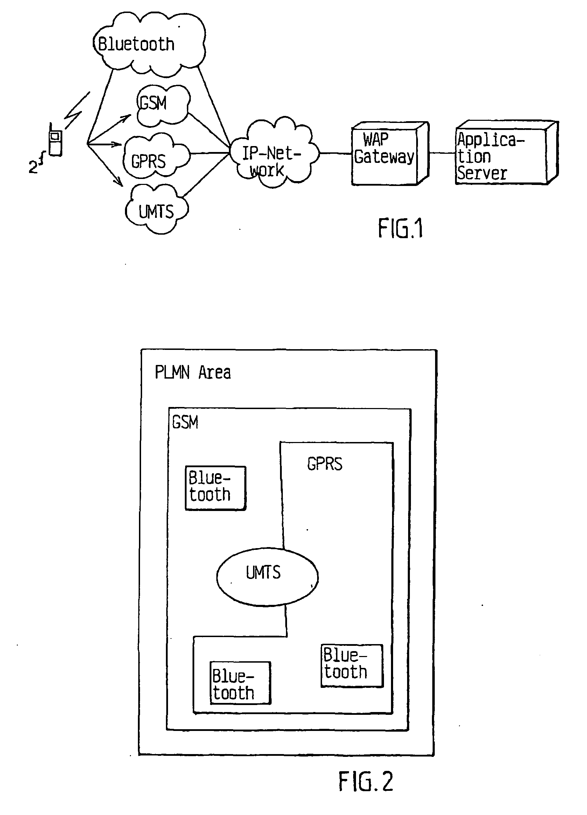

Figure 1 illustrates a system according to the state of the art.
A terminal 2, e.g. a mobile phone, can reach an Application Server via a Wireless Application Protocol (WAP) Gateway and via several types of access technology. The WAP technologies are e.g. described on http://www.wapforum.org/, (homepage for WAP forum) or http: //www.wapforum.org/what/technical.htm, (WAP Specifications).

Wireless Application Protocol (WAP) is a technology that enables wireless access to Internet applications from a terminal, preferably a mobile phone.
The WAP forum has defined a WAP architecture for pulling (i.e. user initiated) information from Internet (e.g. Internet browsing) and pushing (i.e. application initiated) information (e.g. sending news messages, mail notification).

Wireless Application Environment (WAE) has adopted a model that closely follows the World Wide Web (WWW) model. All content is specified in formats that are similar to the standard Internet formats. Content is transported using standard protocols in the WWW domain and an optimized HTTP-like protocol in the wireless domain, a WAP communication protocol, preferably the Wireless Session Protocol (WSP). WAE has borrowed from WWW standards including authorizing and publishing methods wherever possible.

A mobile phone could establish a circuit switched data call in the GSM network or use a packet switched data network like the General Packet Radio Services (GPRS) or the Universal Mobile Telephone System (UMTS) which is the standard for the next generation mobile telephone system in Europe. There is also the possibility to use short-range radio access technology like Bluetooth. As mentioned above figure 1 illustrates a communication system according to the prior art where a mobile telephone 2 may establish connection to an application server via one of many access bearers (e.g. Bluetooth, GSM, GPRS or UMTS), a WAP Gateway and an IP network.
In figure 1 the Application Server is connected to the WAP Gateway via a LAN or via an Internet Protocol network (IP network) and the WAP Gateway may in turn be connected to the mobile phone 2 via a further a IP network. It should be noted that one of the IP networks in figure 1 might be omitted. The protocol used from the WAP Gateway to reach the applications, residing in the Application Server, is HTTP (the HTTP specification is a well-known established standard that is described on http://www.ietf.org/rfc/rfc2068.txt?number=2068).
The Application Server does not know what bearer the access was made with which might lead to unacceptable consequences regarding a user's possibility to access certain application information.
For example, if you surf (using SMS bearer) and select a WAP page, that was designed for CSD (9.6 Kbps), could result in that the downloading time for the page will be too long and therefore inconvenient for the end user.

One object of the present invention is to increase and optimize a user's accessibility of application information, inter alia in terms of shorter downloading time.

Another aspect of the present invention will now be discussed with references to figure 2. In an operator mobile network (PLMN) the different access types will coexists and will be unevenly deployed in one time of point. An operator that has GSM coverage and decides to introduce GPRS will start to do this in selected areas, like for example in cities. The same will be valid when introducing a next generation mobile system, e.g. UMTS. The reason for gradually introducing the bearers with the higher capacity is related to cost. It is a big investment for the operator to introduce new access bearers.

Figure 2 discloses coverage for different radio accesses in a mobile network.
Mobile phones may be moved around in the PLMN area and, depending on the radio accesses availability, be able to use different bearers. Another aspect regarding the choice of bearer, except for different downloading times, is related to the different costs for using different bearers. It may be cheaper to use one before another bearer.

WO 9956431 describes a method for handling sessions between a wireless terminal and a server, wherein the terminal initiates a request of data to the server, said request comprising an identification of the requested data and terminal ID. The server uses the terminal ID to check up user profile information from an associated database. The user profile information indicates a data format which shall be handled be the terminal. This info can then be used by the server to forward the requested data to the terminal in the format defined by the user profile information.

WO 9535002 describes a method and an apparatus for negotiating service configurations in a digital communication system. The method comprises generating and transmitting a request message indicative of a service configuration at a first communication device, receiving the request at a second device, determining if the configuration request is acceptable in accordance with the capabilities of the second device, and generating and transmitting a response message in accordance with the determination, to the first device.

WO 0135689, which is a prior art document falling under Article 54(3) EPC, describes a method and a system for supplying data via a network system, the method comprising the steps of: Establishing a connection using an initial data bearer; requesting, by a terminal, a service for providing the data; selecting a preferred data bearer for supplying the data; judging the selected data bearer and rejecting or accepting the selected data bearer based on the judging step. The bearer may be selected based on terminal capabilities.

A drawback with communication systems used today is that the information about the bearer is not known to the application, e.g. when using WAP. Thus, another object of the present invention is to provide a communication system that overcomes this drawback.

### Summary of the invention

The above-mentioned objects are achieved by a communication system, its elements and methods of operating communication system and its elements according to the characterizing portions of the independent claims, as well as by user agent program according to Claim 24.

Preferred embodiments are set forth in the dependent claims.

A mobile phone may use different bearers, e.g. GPRS, Circuit Switched Data (CSD) or SMS/USSD (via GSM), and the same bearer may use different transmission speeds depending on for example available channels at the moment. In order for the application to know the capability of the bearer that is used in the radio access the capability must be recognized and forwarded to the application server. This may be done in two ways according to a first and second preferred embodiment of the present invention.
Thus, since information about the capability of the bearer is conveyed to the application, the present invention overcomes the above-mentioned drawbacks by making it possible for an application to tailor the accessed information content depending on the capability of the bearer that is used for the specific access.

In order to provide the user with a valuable service, the application has to adapt to the capability of the bearer that is used for the access. Adaptation can mean that the information formatting is adjusted to the bearer capabilities or even that the information itself is adjusted. An example of the latter case is an application that only sends a summary of world news to a mobile phone rather than extensive articles.

### Short description of the appended drawings

Figure 1 illustrates a system according to the state of the art.
Figure 2 shows coverage for different radio accesses in a mobile network
Figure 3 shows a first preferred embodiment of the invention.
Figure 4 shows a second preferred embodiment of the invention.

### Detailed description of preferred embodiments of the invention

The capability of an access bearer includes a parameter regarding the transmission speed used by that bearer. Also other parameters related to the transmission, e.g. bandwidth, may be included in the capability information.

Throughout the application, "terminal" is used to describe a device adapted to initiate an information request to an application server and to receive the requested information. In the description of the preferred embodiment the terminal is exemplified by a mobile phone. However, any device provided with means for generating such an information request may be used as a terminal. Among those may be mentioned a laptop computer, a mobile phone, and all hand-held devices adapted to be wirelessly connected to an application server.

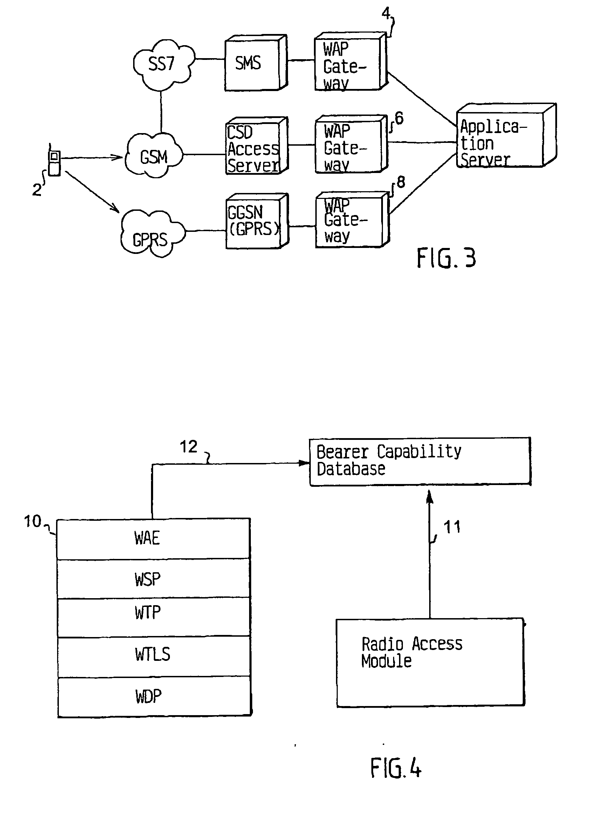

A first preferred embodiment of the invention will now be described in connection with figure 3, where one WAP Gateway 4,6,8 is arranged for each type of radio access bearer.
The embodiment shown in figure 3 discloses three examples of access bearers, each being provided with a WAP Gateway especially designed with regard to the capability for its respective access bearer. In the figure is the Short Message Service (SMS) server connected to the terminal 2 via a Signaling System No. 7 (SS7) (a protocol for signaling) and GSM network in accordance with established technique. The CSD Access Server and the Gateway GPRS Support Node (GGSN) server are connected to the terminal 2 via a GSM network and a GPRS network, respectively, also in accordance with established technique.
The number of WAP Gateways is naturally not limited to three; instead the number of used WAP Gateways equals the number of different used access bearers.

By having one gateway per type of access bearer, the different gateways would know the capability of the access bearer it is serving but maybe not the actual used transmission speed, because it may be decided at the phone, if the used bearer are capable of using different speeds.

The terminal initiates a request (WAP request or HTTP request) which is sent to the application via the access bearer and the gateway allocated to the access bearer. When the request passes the gateway, the capability of the access bearer is appended to the request. This could be done, for example, by using a cookie in a header of the request.
Before the capability is appended to the request, if the request was made from a WAP enabled terminal, i.e. was a WAP request, the request in Wireless Session Protocol (WSP) is transformed into an HTTP request. Then, the WAP Gateway appends to the HTTP request the capability of the access bearer in an HTTP header of the HTTP request.
Example of a HTTP header:
Cookie: Access-Bearer-Type="(*bearer*)".
Where bearer is the type of access. For example, *SMS, USSD (Unstructured*
*Supplemental Service Data), CSD-9.6, CSD-14.4, GPRS, UMTS* or *Bluetooth*.

The HTTP request is then supplied to the Application Server.

The requested application server is able to extract the Access-Bearer-Type cookie from the HTTP header according to well-known HTTP programming technique.
The requested application may then be tailored in response of the received capability of the access bearer in order to achieve an optimized transmission to the terminal requesting the application information.

An alternative embodiment to the above-described first preferred embodiment of the invention is to substitute the WAP gateway with an HTTP proxy server. This would be possible if a terminal (e.g. mobile phone) would use HTTP directly.

A second preferred embodiment of the invention is described in connection with figure 4.
Figure 4 illustrates components in a terminal that is used when implementing the present invention according to the second preferred embodiment. The terminal comprises a Radio Access Module (RAM), a Bearer Capability Database (BCD) and a WAP User Agent 10.
The Radio Access Module is able to detect the type of bearer that the terminal uses based upon, for example, frequencies and number of time slots in the radio link. This information is continuously interpreted in the RAM. By interpreting used frequency, number of time slots, type of radio channel used, the RAM will calculate used transmission speed, and continuously write it into the memory storage of the Bearer Capability Database (1/1 in figure 4). At each request, this information in the BCD is appended to the request message (1/2 in figure 4). If the terminal already is connected to the application server and a change in the capabilities occurs, the terminal is informed and the RAM interprets it and writes it continuously into the BCD. This new information is then appended into the next WAP request (or HTTP request).

The User Agent 10 (defined in the above referenced WAP specification and shown to the left in the figure) comprises a number of protocol layers. An alternative to a WAP user agent would be to directly use an HTTP client in the terminal. The different layers in the WAP User Agent from above are: Wireless Application Environment (WAE), Wireless Session Protocol (WSP), Wireless Transaction Protocol (WTP), Wireless Transport Layer Security (WTLS) and Wireless Datagram Protocol. (WDP). When an application request (information request) is initiated the User Agent (or HTTP client) is arranged to make a WAP request (or HTTP request) to an application via the WAP protocol (or HTTP protocol) and the relevant capability of the access bearer is identified in the Bearer Capability Database.
The thus identified capability is then appended to the WAP request (HTTP request) in a WAP header (or HTTP header).

For an example of an HTTP header, see the first preferred embodiment of the invention described above.
A WAP header will have the same look but can be binary encoded.

When the application server has received the capability of the used bearer, e.g. according to one of the described embodiments, the application is adapted to tailor the application information to be transmitted to the accessing user.
This may be performed in many different ways, e.g. the information formatting is adjusted to the bearer capabilities or even that the information itself is adjusted. An example of the latter case is an application that only sends a summary of world news to a mobile phone rather than extensive articles. Another example of adjusting the information is to filter out images from a newspaper article and only send the text information.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A wireless communication system comprising:
a terminal (2), adapted to be wirelessly connected to the system, via at least one access means (SMS, CSD, GPRS), each of which is arranged to provide wireless access to the terminal over a type of access bearer, each access bearer having a bearer capability,
at least one gateway (4, 6, 8) connected to the at least one access means, and
an application server connected to the at least one gateway,
wherein the terminal (2) is adapted to initiate an information request to the application server and to receive the requested information, wherein the system is arranged to convey the information request via one of the access bearers and its associated access means, and one of the at least one gateway, and wherein the application server is arranged to provide access to information to the terminal in response to the conveyed information request, **characterized in that** the system is arranged to append to the information request, information about bearer capability for the access bearer used for conveying the information request, and **in that** the application server is arranged to tailor the requested information depending on the information about bearer capability for the access bearer used for conveying the information request.

2. Wireless communication system according to claim 1, **characterized in that** the at least one gateway (4, 6, 8) is adapted to append to the information request the information about bearer capability for the access bearer used for conveying the information request.

3. Wireless communication system according to claim 2, **characterized in that** each of the at least one gateway (4, 6, 8) is connected to one of the at least one access means (SMS, CSD, GPRS), such that the number of gateways equals the number of types of access bearers.

4. Wireless communication system according to claim 1, **characterized in that** the terminal (2) is adapted to append to the information request the information about bearer capability for the access bearer used for conveying the information request.

5. Wireless communication system according to any of claims 1-4,
**characterized in that** said information request is a Wireless Application Protocol, WAP, request.

6. Wireless communication system according to claim 5, **characterized in that** the terminal (2) is arranged to append the information about bearer capability to a Wireless Session Protocol, WSP, information request when using WAP.

7. Wireless communication system according to any of claims 1-4,
**characterized in that** said information request is a Hypertext Transfer Protocol, HTTP, request.

8. Wireless communication system according to any preceding claim,
**characterized in that** the system is arranged to append the information about bearer capability in a header of the information request.

9. Wireless communication system according to any preceding claim,
**characterized in that** that the information about bearer capability includes parameters regarding the transmission speed used by the access bearer used for conveying the information request.

10. A terminal (2) in a wireless communication system, which terminal is adapted to be wirelessly connected to at least one access means (SMS, CSD, GPRS), each of which is arranged to provide wireless access over a type of access bearer, each access bearer having a bearer capability, wherein the terminal comprises:
means for initiating an information request to an application server, which information request is conveyed via one of the access bearers and its associated access means connected to a gateway (4, 6, 8), and
means for receiving the requested information from the application server,
**characterized in that** the terminal (2) further comprises means for appending to the information request, information about bearer capability for the access bearer used for conveying the information request, and **in that** the means for receiving is further arranged for receiving the requested information tailored depending on the information about bearer capability for the access bearer used for conveying the information request.

11. Terminal (2) according to claim 10, **characterized in that** the terminal further comprises a radio access module (Radio Access Module) adapted to collect information regarding the used access bearer.

12. Terminal (2) according to claim 11, **characterized in that** the terminal further comprises a database (Bearer Capability Database), and that the radio access module is further arranged to interpret the collected information and to write the interpreted information into the database.

13. Terminal (2) according to any of claims 10-12, **characterized in that** the means for appending information about bearer capability to the information request is a user agent (10), and **in that** the user agent is arranged to append the information about bearer capability to a WAP request or an HTTP request.

14. Terminal (2) according to claim 13, **characterized in that** the user agent (10) is arranged to identify the information about bearer capability in the database (Bearer Capability Database) and to append the information about bearer capability to the WAP request or HTTP request.

15. A gateway (4, 6, 8) in a wireless communication system, which gateway is connected to an access means (SMS, CSD, GPRS), arranged to provide wireless access to a terminal (2) over a type of access bearer, the gateway further being connected to an application server, wherein the gateway is adapted to receive an information request from the terminal (2), which information request was received from the terminal via an access bearer and the access means, which access bearer has a bearer capability, wherein the gateway is further adapted to send the received information request to an application server, **characterized in that** the gateway is further adapted to append to the information request, information about bearer capability for the access bearer used for conveying the information request.

16. An application server in a wireless communication system, the application server comprising:
means for receiving an information request from a terminal (2), via an access bearer and its associated access means (SMS, CSD, GPRS) connected to a gateway (4, 6, 8), which access bearer has a bearer capability, and
means for providing access to information to the terminal (2) in response to the received information request,
**characterized in that** the server further comprises:
means for extracting from the information request, information about bearer capability for the access bearer used for conveying the information request, which information about bearer capability is appended to the information request, and
means for tailoring the requested information depending on the information about bearer capability for the access bearer used for conveying the information request.

17. Method of operating a wireless communication system comprising a terminal (2) wirelessly connected to the system via one of at least one access means (SMS, CSD, GPRS), each of which is arranged to provide wireless access to the terminal over a type of access bearer, each access bearer having a bearer capability, the system further comprising at least one gateway (4, 6, 8) connected to the at least one access means (SMS, CSD, GPRS), and an application server connected to the at least one gateway, the method comprising the step of:
initiating an information request from the terminal (2) to the application server, which information request is conveyed via one of the access bearers, its associated access means and one of the at least one gateway, and
providing access to information to the terminal in response to the conveyed information request, **characterized in that** the method further comprises the steps of:
appending, to the information request, information about bearer capability for the access bearer used for conveying the information request, and
tailoring, by the application server, the requested information depending on the information about bearer capability for the access bearer used for conveying the information request.

18. Method according to claim 17, **characterized in that** the information about bearer capability for the access bearer used for conveying the information request is appended to the information request in the gateway (4, 6, 8) used for conveying the information request.

19. Method according to claim 17, **characterized in that** the information about bearer capability for the access bearer used for conveying the information request is appended to the information request by the terminal (2).

20. Method of operating a terminal (2) in a wireless communication system, which terminal is wirelessly connected to an access means (SMS, CSD, GPRS), over an access bearer provided by the access means, the access bearer having a bearer capability, the method comprising the steps of:
initiating an information request to an application server, which information request is conveyed via the access bearer and its associated access means connected to a gateway (4, 6, 8), and
receiving the requested information from the application server,
**characterized in that** the method further comprises the step of:
appending to the information request, information about bearer capability for the access bearer used for conveying the information request,
and **in that** the step of receiving comprises receiving the requested information tailored depending on the information about bearer capability for the access bearer used for conveying the information request.

21. Method according to claim 20, further comprising the step of identifying the information about bearer capability in a database (Bearer Capability Database).

22. Method of operating a gateway (4, 6, 8) in a wireless communication system, which gateway is connected to an access means (SMS, CSD, GPRS), arranged to provide wireless access to a terminal (2) over a type of access bearer, and to an application server, the method comprising the steps of:
receiving an information request from the terminal (2), which information request was received from the terminal via an access bearer and the access means, which access bearer has a bearer capability,
sending the received information request to an application server,
**characterized in that** the method further comprises the step of:
appending to the information request, information about bearer capability for the access bearer used for conveying the information request.

23. Method of operating an application server in a wireless communication system, the method comprising the steps of:
receiving an information request from a terminal (2), via an access bearer and its associated access means (SMS, CSD, GPRS) connected to a gateway (4, 6, 8), which access bearer has a bearer capability, and
providing access to information to the terminal (2) in response to the received information request,
**characterized in that** the method further comprises the steps of:
extracting from the information request, information about bearer capability for the access bearer used for conveying the information request, which information about bearer capability is appended to the information request, and
tailoring the requested information depending on the information about bearer capability for the access bearer used for conveying the information request.

24. A user agent (10) program adapted to be run on a digital computer device residing in a terminal (2), wherein the user agent program is loadable into a memory of the digital computer device, and wherein the user agent program comprises software code portions for performing the steps of a method according to any of claims 20 or 21, when the user agent program is run on the computer device.

## Patentansprüche

1. Drahtloses Kommunikationssystem mit:
einem Endgerät (2), das angepasst ist, drahtlos mit dem System verbunden zu sein, über wenigstens eine Zugriffseinrichtung (SMS, CSD, GPRS), von denen jede angeordnet ist, einen drahtlosen Zugriff auf das Endgerät über einen Typ eines Zugriffsträgers bereitzustellen, wobei jeder Zugriffsträger eine Trägerfähigkeit hat,
einem mit der wenigstens einen Zugriffseinrichtung verbundenen Gateway (4, 6, 8), und
einem mit dem wenigstens einen Gateway verbundenen Anwendungsserver,
wobei das Endgerät (2) ausgebildet ist zum Einleiten einer Informationsanforderung an den Anwendungsserver und zum Empfangen der angeforderten Information,
wobei das System angeordnet ist, die Informationsanforderung über einen der Zugriffsträger und seine verknüpfte Zugriffseinrichtung, und eines des wenigstens einen Gateways zu befördern, und wobei der Anwendungsserver angeordnet ist, dem Endgerät einen Zugriff auf eine Information in Ansprechen auf die beförderte Informationsanforderung bereitzustellen,
**dadurch gekennzeichnet, dass**
das System angeordnet ist zum Anfügen, an die Informationsanforderung, einer Information über eine Trägerfähigkeit für den zum Befördern der Informationsanforderung verwendeten Zugriffsträger, und dass
der Anwendungsserver angeordnet ist, die angeforderte Information abhängig von der Information über eine Trägerfähigkeit für den zum Befördern der Informationsanforderung verwendeten Zugriffsträger zuzuschneiden.

2. Drahtloses Kommunikationssystem gemäß Anspruch 1, **dadurch gekennzeichnet, dass** das wenigstens eine Gateway (4, 6, 8) ausgebildet ist, an die Informationsanforderung die Information über eine Trägerfähigkeit für den zum Befördern der Informationsanforderung verwendeten Zugriffsträger anzufügen.

3. Drahtloses Kommunikationssystem gemäß Anspruch 2, **dadurch gekennzeichnet, dass** jedes des wenigstens einen Gateways (4, 6, 8) mit einer der wenigstens einen Zugriffseinrichtung (SMS, CSD, GPRS) verbunden ist, so dass die Anzahl von Gateways der Anzahl von Typen von Zugriffsträgern gleicht.

4. Drahtloses Kommunikationssystem gemäß Anspruch 1, **dadurch gekennzeichnet, dass** das Endgerät (2) ausgebildet ist, an die Informationsanforderung die Information über eine Trägerfähigkeit für den zum Befördern der Informationsanforderung verwendeten Zugriffsträger anzufügen.

5. Drahtloses Kommunikationssystem gemäß einem der Ansprüche 1 bis 4, **dadurch gekennzeichnet, dass** die Informationsanforderung eine Anforderung für Wireless Application Protocol, WAP, ist.

6. Drahtloses Kommunikationssystem gemäß Anspruch 5, **dadurch gekennzeichnet, dass** das Endgerät (2) angeordnet ist, die Information über eine Trägerfähigkeit an eine Informationsanforderung für Wireless Session Protocol, WSP, beim Verwenden von WAP anzufügen.

7. Drahtloses Kommunikationssystem gemäß einem der Ansprüche 1 bis 4, **dadurch gekennzeichnet, dass** die Informationsanforderung eine Anforderung für Hyper Text Transfer Protocol, HTTP, ist.

8. Drahtloses Kommunikationssystem gemäß einem der vorhergehenden Ansprüche, **dadurch gekennzeichnet, dass** das System angeordnet ist, die Information über eine Trägerfähigkeit in einen Header der Informationsanforderung anzufügen.

9. Drahtloses Kommunikationssystem gemäß einem der vorhergehenden Ansprüche, **dadurch gekennzeichnet, dass** die Information über eine Trägerfähigkeit Parameter bezüglich der Übertragungsgeschwindigkeit enthält, die durch den zum Befördern der Informationsanforderung verwendeten Zugriffsträger verwendet ist.

10. Endgerät (2) in einem drahtlosen Kommunikationssystem, wobei das Endgerät ausgebildet ist, drahtlos mit wenigstens einer Zugriffseinrichtung (SMS, CSD, GPRS) verbunden zu sein, von denen jede angeordnet ist zum Bereitstellen eines drahtlosen Zugriffs über einen Typ eines Zugriffsträgers, wobei jeder Zugriffsträger eine Trägerfähigkeit hat, wobei das Endgerät umfasst:
eine Einrichtung zum Einleiten einer Informationsanforderung an einen Anwendungsserver, deren Informationsanforderung über einen der Zugriffsträger und dessen mit einem Gateway (4, 6, 8) verbundenen verknüpften Zugriffseinrichtung befördert ist, und
eine Einrichtung zum Empfangen der angeforderten Information von dem Anwendungsserver, **dadurch gekennzeichnet, dass** das Endgerät (2) ferner eine Einrichtung zum Anfügen, an die Informationsanforderung, einer Information über eine Trägerfähigkeit für den zum Befördern der Informationsanforderung verwendeten Zugriffsträger umfasst, und dass die Einrichtung zum Empfangen ferner angeordnet ist zum Empfangen der angeforderten Information, die abhängig von der Information über eine Trägerfähigkeit für den zum Befördern der Informationsanforderung verwendeten Zugriffsträger zugeschnitten ist.

11. Endgerät (2) gemäß Anspruch 10, **dadurch gekennzeichnet, dass** das Endgerät ferner ein Funkzugriffsmodul (Radio Access Module) umfasst, das ausgebildet ist zum Sammeln von Information bezüglich des verwendeten Zugriffsträgers.

12. Endgerät (2) gemäß Anspruch 11, **dadurch gekennzeichnet, dass** das Endgerät ferner eine Datenbank (Bearer Capability Database) umfasst, und dass das Funkzugriffsmodul ferner angeordnet ist zum Interpretieren der gesammelten Information und zum Schreiben der interpretierten Information in die Datenbank.

13. Endgerät (2) gemäß einem der Ansprüche 10 bis 12, **dadurch gekennzeichnet, dass** die Einrichtung zum Anfügen einer Information über eine Trägerfähigkeit an die Informationsanforderung ein Benutzeragent (10) ist, und dass der Benutzeragent angeordnet ist zum Anfügen der Information über eine Trägerfähigkeit an eine WAP-Anforderung oder eine HTTP-Anforderung.

14. Endgerät (2) gemäß Anspruch 13, **dadurch gekennzeichnet, dass** der Benutzeragent (10) angeordnet ist zum Identifizieren der Information über eine Trägerfähigkeit in der Datenbank (Bearer Capability Database) und zum Anfügen der Information über eine Trägerfähigkeit an die WAP-Anforderung oder HTTP-Anforderung.

15. Gateway (4, 6, 8) in einem drahtlosen Kommunikationssystem, wobei das Gateway mit einer Zugriffseinrichtung (SMS, CSD, GPRS) verbunden ist, das angeordnet ist zum Bereitstellen eines drahtlosen Zugriffs auf ein Endgerät (2) über einen Typ eines Zugriffsträgers, wobei das Gateway ferner mit einem Anwendungsserver verbunden ist, wobei das Gateway ausgebildet ist zum Empfangen einer Informationsanforderung von dem Endgerät (2), dessen Informationsanforderung von dem Endgerät über einen Zugriffsträger und die Zugriffseinrichtung empfangen wurde, dessen Zugriffsträger eine Trägerfähigkeit hat, wobei das Gateway ferner ausgebildet ist zum Senden der empfangenen Informationsanforderung an einen Anwendungsserver, **dadurch gekennzeichnet, dass** das Gateway ferner ausgebildet ist zum Anfügen, an die Informationsanforderung, einer Information über eine Trägerfähigkeit für den zum Befördern der Informationsanforderung verwendeten Zugriffsträger.

16. Anwendungsserver in einem drahtlosen Kommunikationssystem, wobei der Anwendungsserver umfasst:
eine Einrichtung zum Empfangen einer Informationsanforderung von einem Endgerät (2), über einen Zugriffsträger und dessen, mit einem Gateway (4, 6, 8) verbundenen, verknüpften Zugriffseinrichtung (SMS, CSD, GPRS), deren Zugriffsträger eine Trägerfähigkeit hat, und
eine Einrichtung, um eine Information dem Endgerät (2) in Ansprechen auf die empfangene Informationsanforderung bereitzustellen,
**dadurch gekennzeichnet, dass** der Server ferner umfasst:
eine Einrichtung zum Extrahieren, aus der Informationsanforderung, einer Information über eine Trägerfähigkeit für den zum Befördern der Informationsanforderung verwendeten Zugriffsträger, wobei die Information über eine Trägerfähigkeit an die Informationsanforderung angefügt ist, und
eine Einrichtung zum Zuschneiden der angeforderten Information abhängig von der Information über eine Trägerfähigkeit für den zum Befördern der Informationsanforderung verwendeten Zugriffsträger.

17. Verfahren zum Betreiben eines drahtlosen Kommunikationssystems mit einem Endgerät (2), das drahtlos mit dem System mit einer der wenigstens einen Zugriffseinrichtung (SMS, CSD, GPRS) verbunden ist, von denen jede angeordnet ist zum Bereitstellen eines drahtlosen Zugriffs auf das Endgerät über einen Typ eines Zugriffsträgers, wobei jeder Zugriffsträger eine Trägerfähigkeit hat, wobei das System ferner wenigstens ein Gateway (4, 6, 8) umfasst, das mit der wenigstens einen Zugriffseinrichtung (SMS, CSD, GPRS) verbunden ist, und einen mit dem wenigstens einen Gateway verbundenen Anwendungsserver, wobei das Verfahren die Schritte umfasst zum:
Einleiten einer Informationsanforderung von dem Endgerät (2) zu dem Anwendungsserver, wobei die Informationsanforderung über einen der Zugriffsträger, dessen verknüpfte Zugriffseinrichtung und eines des wenigstens einen Gateways befördert wird, und
dem Endgerät einen Zugriff auf eine Information Bereitstellen in Ansprechen auf die beförderte Informationsanforderung, **dadurch gekennzeichnet, dass** das Verfahren ferner die Schritte umfasst zum:
Anfügen, an die Informationsanforderung, einer Information über eine Trägerfähigkeit für den zum Befördern der Informationsanforderung verwendeten Zugriffsträger, und
Zuschneiden, durch den Anwendungsserver, der angeforderten Information abhängig von der Information über eine Trägerfähigkeit für den zum Befördern der Informationsanforderung verwendeten Zugriffsträger.

18. Verfahren gemäß Anspruch 17, **dadurch gekennzeichnet, dass** die Information über eine Trägerfähigkeit für den zum Befördern der Informationsanforderung verwendeten Zugriffsträger an die Informationsanforderung in dem zum Befördern der Informationsanforderung verwendeten Gateway (4, 6, 8) angefügt wird.

19. Verfahren gemäß Anspruch 17, **dadurch gekennzeichnet, dass** die Information über eine Trägerfähigkeit für den zum Befördern der Informationsanforderung verwendeten Zugriffsträger an die Informationsanforderung durch das Endgerät (2) angefügt wird.

20. Verfahren zum Betreiben eines Endgerätes (2) in einem drahtlosen Kommunikationssystem, wobei das Endgerät drahtlos mit einer Zugriffseinrichtung (SMS, CSD, GPRS) verbunden ist, über einen durch die Zugriffseinrichtung bereitgestellten Zugriffsträger, wobei der Zugriffsträger eine Trägerfähigkeit hat, wobei das Verfahren die Schritte umfasst:
Einleiten einer Informationsanforderung an einen Anwendungsserver, wobei die Informationsanforderung über den Zugriffsträger und dessen verknüpfte, mit einem Gateway (4, 6, 8) verbundene, Zugriffseinrichtung befördert wird, und
Empfangen der angeforderten Information von dem Anwendungsserver, **dadurch gekennzeichnet, dass** das Verfahren ferner den Schritt umfasst zum:
Anfügen, an die Informationsanforderung, einer Information über eine Trägerfähigkeit für den zum Befördern der Informationsanforderung verwendeten Zugriffsträger,
und dass der Schritt zum Empfangen ein Empfangen der angeforderten Information umfasst, die abhängig von der Information über eine Trägerfähigkeit für den zum Befördern der Informationsanforderung verwendeten Zugriffsträger zugeschnitten ist.

21. Verfahren gemäß Anspruch 20, ferner den Schritt zum Identifizieren der Information über eine Trägerfähigkeit in einer Datenbank (Bearer Capability Database) umfassend.

22. Verfahren zum Betreiben eines Gateways (4, 6, 8) in einem drahtlosen Kommunikationssystem, wobei das Gateway mit einer Zugriffseinrichtung (SMS, CSD, GPRS) verbunden ist, angeordnet zum Bereitstellen eines drahtlosen Zugriffs auf ein Endgerät (2) über einen Typ eines Zugriffsträgers, und mit einem Anwendungsserver, wobei das Verfahren die Schritte umfasst zum:
Empfangen einer Informationsanforderung von dem Endgerät (2), wobei die Informationsanforderung von dem Endgerät über einen Zugriffsträger und die Zugriffseinrichtung empfangen wurde, deren Zugriffsträger eine Trägerfähigkeit hat,
Senden der empfangenen Informationsanforderung an einen Anwendungsserver,
**dadurch gekennzeichnet, dass** das Verfahren ferner den Schritt umfasst:
Anfügen, an die Informationsanforderung, einer Information über eine Trägerfähigkeit für den zum Befördern der Informationsanforderung verwendeten Zugriffsträger.

23. Verfahren zum Betreiben eines Anwendungsservers in einem drahtlosen Kommunikationssystem, wobei das Verfahren die Schritte umfasst:
Empfangen einer Informationsanforderung von einem Endgerät (2), über einen Zugriffsträger und dessen verknüpfte, mit einem Gateway (4, 6, 8) verbundene, Zugriffseinrichtung (SMS, CSD, GPRS), deren Zugriffsträger eine Trägerfähigkeit hat, und
dem Endgerät (2) einen Zugriff auf eine Information Bereitstellen in Ansprechen auf die empfangene Informationsanforderung,
**dadurch gekennzeichnet, dass** das Verfahren ferner die Schritte umfasst zum:
Extrahieren, aus der Informationsanforderung, einer Information über eine Trägerfähigkeit für den zum Befördern der Informationsanforderung verwendeten Zugriffsträger, wobei die Information über eine Trägerfähigkeit an die Informationsanforderung angefügt wird, und
Zuschneiden der angeforderten Information abhängig von der Information über eine Trägerfähigkeit für den zum Befördern der Informationsanforderung verwendeten Zugriffsträger.

24. Programm für einen Benutzeragenten (10), das ausgebildet ist, auf einer sich in einem Endgerät (2) befindenden digitalen Computervorrichtung ausgeführt zu werden, wobei das Programm für einen Benutzeragenten in einen Speicher der digitalen Computervorrichtung ladbar ist, und wobei das Programm für einen Benutzeragenten Software-Code-Teilstücke zum Durchführen der Schritte eines Verfahrens gemäß irgendeinem der Ansprüche 20 oder 21 umfasst, wenn das Programm für einen Benutzeragenten auf der Computervorrichtung betrieben wird.

## Revendications

1. Système de communication sans fil comprenant:
un terminal (2), adapté pour être connecté sans fil au système, via au moins un moyen d'accès (SMS, pour « *Small Message Service* » - Service de messages courts, CSD, pour *« Circuit Switch Data* » - Données à commutation de circuits, GPRS, pour *« General Packet Radio Service » -* Service général de packets par radio), chacun de ceux-ci étant agencé pour fournir un accès sans fil au terminal, sur un type de support d'accès, chaque support d'accès ayant une capacité de transport,
au moins une passerelle (4, 6, 8) connectée audit au moins un moyen d'accès, et
un serveur d'applications connecté à ladite au moins une passerelle,
dans lequel le terminal (2) est adapté pour lancer une demande d'informations au serveur d'applications et pour recevoir les informations demandées, dans lequel le système est conçu pour acheminer la demande d'informations via l'un des supports d'accès et son moyen d'accès associé, ainsi que ladite au moins une passerelle, et dans lequel le serveur d'applications est agencé pour fournir au terminal un accès aux informations en réponse à la demande d'informations acheminée,
**caractérisé en ce que** le système est conçu pour concaténer à la demande d'informations des informations sur la capacité de transport du support d'accès utilisé pour acheminer la demande d'informations et **en ce que** le serveur d'applications est agencé pour adapter les informations demandées en fonction des informations sur la capacité de transport du support d'accès utilisé pour acheminer la demande d'informations.

2. Système de communication sans fil selon la revendication 1, **caractérisé en ce que** ladite au moins une passerelle (4, 6, 8) est adaptée pour concaténer à la demande d'informations les informations sur la capacité de transport du support d'accès utilisé pour acheminer la demande d'informations.

3. Système de communication sans fil selon la revendication 2, **caractérisé en ce que** chacune desdites passerelles (4, 6, 8), au nombre d'au moins une, est connectée à un des moyens d'accès (SMS, CVD, GPRS), au nombre d'au moins un, si bien que le nombre des passerelles est égal au nombre des types de supports d'accès.

4. Système de communication sans fil selon la revendication 1, **caractérisé en ce que** le terminal (2) est adapté pour concaténer à la demande d'informations les informations sur la capacité de transport du support d'accès utilisé pour acheminer la demande d'informations.

5. Système de communication sans fil selon l'une quelconque des revendications 1 à 4, **caractérisé en ce que** ladite demande d'informations est une demande selon le protocole applicatif sans fil (WAP, pour « *Wireless Application Protocol* »).

6. Système de communication sans fil selon la revendication 5, **caractérisé en ce que** le terminal (2) est agencé, lorsqu'il utilise le protocole WAP, pour concaténer les informations sur la capacité de transport à une demande d'information selon le protocole de session sans fil (WSP, pour « *Wireless Session Protocol* »).

7. Système de communication sans fil selon l'une quelconque des revendications 1 à 4, **caractérisé en ce que** ladite demande d'informations est une demande selon le protocole de transfert d'hypertexte (http, pour « *Hypertext Transfer Protocol* »).

8. Système de communication sans fil selon l'une quelconque des revendications précédentes, **caractérisé en ce que** le système est agencé pour concaténer les informations sur la capacité de transport dans un en-tête de la demande d'informations.

9. Système de communication sans fil selon l'une quelconque des revendications précédentes, **caractérisé en ce que** les informations sur les capacités de transport comprennent des paramètres intéressant la vitesse de transmission utilisée par le support d'accès qui est utilisé pour acheminer la demande d'informations.

10. Terminal (2) dans un système de communication sans fil, lequel terminal est adapté pour être connecté sans fil à au moins un moyen d'accès (SMS, CSD, GPRS), chacun de ceux-ci étant agencé pour fournir un accès sans fil au terminal, sur un type de support d'accès, chaque support d'accès ayant une capacité de transport, dans lequel le terminal comprend:
un moyen destiné à lancer une demande d'informations à un serveur d'applications, la demande d'informations étant acheminée via l'un des supports d'accès et son moyen d'accès associé, connecté à une passerelle (4, 6, 8), et
un moyen destiné à recevoir les informations demandées du serveur d'applications,
**caractérisé en ce que** le terminal (2) comprend en outre un moyen destiné à concaténer à la demande d'informations des informations sur la capacité de transport du support d'accès utilisé pour acheminer la demande d'informations et **en ce que** le moyen de réception est en outre agencé pour recevoir les informations demandées, sous une forme adaptée en fonction des informations sur la capacité de transport du support d'accès utilisé pour acheminer la demande d'informations.

11. Terminal (2) selon la revendication 10, **caractérisé en ce que** le terminal comprend en outre un module d'accès radio (Module d'accès radio) adapté pour recueillir des informations sur le support d'accès utilisé.

12. Terminal (2) selon la revendication 11, **caractérisé en ce que** le terminal comprend en outre une base de données (Base de données des capacités de transport) et **en ce que** le module d'accès radio est en outre agencé pour interpréter les informations recueillies et pour inscrire les informations interprétées dans la base de données.

13. Terminal (2) selon l'une quelconque des revendications 10 à 12, **caractérisé en ce que** le moyen destiné à concaténer des informations sur la capacité de transport à la demande d'information est un agent utilisateur (10) et **en ce que** l'agent utilisateur (10) est agencé pour concaténer les informations sur la capacité de transport à une demande selon le protocole WAP ou à une demande selon le protocole HTTP.

14. Terminal (2) selon la revendication 13, **caractérisé en ce que** l'agent utilisateur (10) est agencé pour identifier les informations sur la capacité de transport dans la base de données (Base de données des capacités de transport) et pour concaténer les informations sur la capacité de transport à une demande selon le protocole WAP ou à une demande selon le protocole HTTP.

15. Passerelle (4, 6, 8) dans un système de communication sans fil, laquelle passerelle est connectée à un moyen d'accès (SMS, CVD, GPRS) agencé pour fournir un accès sans fil à un terminal (2) sur un type de support d'accès, la passerelle étant en outre connectée à un serveur d'applications, dans laquelle la passerelle est adaptée pour recevoir une demande d'informations du terminal (2), laquelle demande d'informations ayant été reçue du terminal via un support d'accès et le moyen d'accès, lequel support d'accès possède une capacité de transport, dans laquelle la passerelle est en outre adaptée pour envoyer la demande d'informations reçue à un serveur d'applications, **caractérisée en ce que** la passerelle est en outre adaptée pour concaténer à la demande d'informations des informations sur la capacité de transport du support d'accès utilisé pour acheminer la demande d'informations.

16. Serveur d'applications dans un système de communication sans fil, le serveur d'applications comprenant :
un moyen destiné à recevoir une demande d'informations d'un terminal (2), via un support d'accès et son moyen d'accès associé (SMS, CVD, GPRS), connecté à une passerelle (4, 6, 8), lequel support d'accès ayant une capacité de transport, et
un moyen destiné à fournir au terminal (2) un accès aux informations en réponse à la demande d'informations reçue,
**caractérisé en ce que** le serveur comprend en outre :
un moyen destiné à extraire de la demande d'informations des informations sur la capacité de transport du support d'accès utilisé pour acheminer la demande d'informations, ces informations sur la capacité de transport étant concaténées à la demande d'informations, et
un moyen destiné à adapter les informations demandées en fonction des informations sur la capacité de transport du support d'accès utilisé pour acheminer la demande d'informations.

17. Procédé d'exploitation d'un système de communication sans fil comprenant un terminal (2), connecté sans fil au système via au moins un moyen d'accès (SMS, CSD, GPRS), chacun de ceux-ci étant agencé pour fournir un accès sans fil au terminal, sur un type de support d'accès, chaque support d'accès ayant une capacité de transport, le système comprenant en outre au moins une passerelle (4, 6, 8) connectée audit au moins un moyen d'accès, le procédé comprenant les étapes consistant à :
lancer une demande d'informations entre le terminal (2) et le serveur d'applications, ladite demande d'informations étant acheminée via l'un des supports d'accès et son moyen d'accès associé, ainsi que ladite au moins une passerelle, et
fournir au terminal un accès aux informations en réponse à la demande d'informations acheminée,
**caractérisé en ce que** le procédé comprend en outre les étapes consistant à :
concaténer à la demande d'informations des informations sur la capacité de transport du support d'accès utilisé pour acheminer la demande d'informations, et
faire adapter, par le serveur d'applications, les informations demandées en fonction des informations sur la capacité de transport du support d'accès utilisé pour acheminer la demande d'informations.

18. Procédé selon la revendication 17, **caractérisé en ce que** les informations sur la capacité de transport du support d'accès utilisé pour acheminer la demande d'informations sont concaténées à la demande d'informations dans la passerelle (4, 6, 8) utilisée pour acheminer la demande d'informations.

19. Procédé selon la revendication 17, **caractérisé en ce que** les informations sur la capacité de transport du support d'accès utilisé pour acheminer la demande d'informations sont concaténées à la demande d'informations par le terminal (2).

20. Procédé d'exploitation d'un terminal (2) dans un système de communication sans fil, lequel terminal étant connecté sans fil à au moins un moyen d'accès (SMS, CSD, GPRS), sur un support d'accès fourni par le moyen d'accès, le support d'accès ayant une capacité de transport, le procédé comprenant les étapes consistant à :
lancer une demande d'informations vers un serveur d'applications, ladite demande d'informations étant acheminée via le support d'accès et son moyen d'accès associé, connecté à une passerelle (4, 6, 8), et
recevoir les informations demandées du serveur d'applications,
**caractérisé en ce que** le procédé comprend en outre l'étape consistant à :
concaténer à la demande d'informations des informations sur la capacité de transport du support d'accès utilisé pour acheminer la demande d'informations, et
**en ce que** l'étape de réception comprend la réception des informations demandées sous une forme adaptée en fonction des informations sur la capacité de transport du support d'accès utilisé pour acheminer la demande d'informations.

21. Procédé selon la revendication 20, comprenant en outre l'étape consistant à identifier les informations sur la capacité de transport dans une base de données (Base de données des capacités de transport).

22. Procédé d'exploitation d'une passerelle (4, 6, 8) dans un système de communication sans fil, laquelle passerelle étant connectée à un moyen d'accès (SMS, CSD, GPRS) agencé pour fournir à un terminal (2) un accès sans fil sur un type de support d'accès et à un serveur d'applications, le procédé comprenant les étapes consistant à :
recevoir une demande d'informations du terminal (2), ladite demande d'informations ayant été reçue du terminal via un support d'accès et le moyen d'accès et ledit support d'accès ayant une capacité de transport,
envoyer la demande d'informations reçue à un serveur d'applications,
**caractérisé en ce que** le procédé comprend en outre l'étape consistant à :
concaténer à la demande d'informations des informations sur la capacité de transport du support d'accès utilisé pour acheminer la demande d'informations.

23. Procédé d'exploitation d'un serveur d'applications dans un système de communication sans fil, le procédé comprenant les étapes consistant à :
recevoir d'un terminal (2) une demande d'informations, via un support d'accès et son moyen d'accès associé (SMS, CVD, GPRS), connecté à une passerelle (4, 6, 8), lequel support d'accès ayant une capacité de transport, et
fournir au terminal (2) un accès aux informations en réponse à la demande d'informations reçue,
**caractérisé en ce que** le procédé comprend en outre les étapes consistant à :
extraire de la demande d'informations des informations sur la capacité de transport du support d'accès utilisé pour acheminer la demande d'informations, ces informations sur la capacité de transport étant concaténées à la demande d'informations, et
adapter les informations demandées en fonction des informations sur la capacité de transport du support d'accès utilisé pour acheminer la demande d'informations.

24. Programme d'agent utilisateur (10), adapté pour être exécuté sur un dispositif d'ordinateur numérique résidant dans un terminal (2), dans lequel le programme d'agent utilisateur peut être chargé dans une mémoire du dispositif d'ordinateur numérique et dans lequel le programme d'agent utilisateur comprend des parties de code logiciel destinées à mettre en oeuvre les étapes d'un procédé selon l'une quelconque des revendications 20 ou 21, lorsque le programme d'agent utilisateur est exécuté sur le dispositif d'ordinateur.
